# EUROPÄISCHE PATENTSCHRIFT

(11) **EP 0 359 003 B1**
(45) Veröffentlichungstag und Bekanntmachung des Hinweises auf die Patenterteilung: **08.12.1993**
(21) Anmeldenummer: 89115675.4
(22) Anmeldetag: 25.08.1989
(51) Int. Cl.: C03B 5/04, C03B 3/00

(54) **Verfahren zur Überführung von festen, weitgehend wasserfreien Abfallstoffen in Glasform sowie Vorrichtung zur Durchführung des Verfahrens**
Process for transforming solid, substantially anhydrous waste materials into glass, and apparatus therefor
Procédé pour vitrifier des déchets solides substantiellement anhydres et appareillage pour le réaliser

(30) Priorität: 10.09.1988 DE 3830899; 13.12.1988 DE 3841889; 16.02.1989 DE 3904613
(43) Veröffentlichungstag der Anmeldung: 21.03.1990
(73) Patentinhaber: BETEILIGUNGEN SORG GMBH & CO. KG, D-97816 Lohr am Main (DE); METALLGESELLSCHAFT AG, 60015 Frankfurt (DE)
(72) Erfinder: Sorg, Helmut Dipl.-Ing., D-8752 Glattbach (DE); Pieper, Helmut Dipl.-Ing., D-8770 Lohr/Main (DE); Zschocher, Helmut Dr., D8770 Lohr/Main (DE); Merlet, Heinz, D-6233 Kelkheim (DE)
(74) Vertreter: Schulze Horn, Stefan, Dipl.-Ing. M.Sc.

(56) Entgegenhaltungen:
- DE-A- 2 631 220
- DE-A- 3 631 729
- US-A- 4 652 289
- US-A- 4 666 490

## Beschreibung

Die Erfindung betrifft ein Verfahren zur Überführung von festen, weitgehend wasserfreien Abfallstoffen in Glasform, wobei als Abfallstoff Müllverbrennungsasche verwendet wird.

Weiterhin betrifft die Erfindung eine Vorrichtung zur Durchführung des Verfahrens.

Es ist seit längerem bekannt, toxische und radioaktive Abfälle in Form von Schlämmen und Suspensionen nach Zugabe von Zuschlagstoffen und Vermischen zu einem Gemenge durch Schmelzen in ein Glas zu überführen, in welches die zuvor frei vorhandenen Schadstoffe fest eingebaut sind. Glas hat dabei die günstige Eigenschaft, sehr schwer auslaugbar zu sein, so daß ein Freisetzen von Schwermetallen oder anderen im Glas enthaltenen Materialien nur in so geringer Form auftreten kann, daß eine Lagerung oder auch Verwendung von Körpern aus einem derartigen Glas ohne weiteres möglich ist.

Eine Schwierigkeit beim Überführen von Müllverbrennungsasche in Glasform besteht darin, daß derartige Abfallstoffe im allgemeinen einen hohen Anteil an Chloriden und Calcium-Sulfat enthalten, welche beim Schmelzvorgang nur in geringem Maße von der Glasschmelze aufgenommen werden, auch wenn die Aufnahmefähigkeit der Glasschmelze für Chloride und Schwefel bis zur Sättigungsgrenze ausgenutzt wird, da das aufzuschmelzende Gemenge entsprechend viel davon enthält. Dies führt nachteilig dazu, daß große Abgasmengen mit aus Chloriden und Sulfaten entstammenden Gasen, insbesondere Cl, HCl, SO₂ und SO₃, anfallen. Im Gegensatz dazu werden Schwermetalle zwar in ausreichendem Umfang in das Glas aufgenommen, jedoch ist es nachteilig, daß die entstehenden Abgase dennoch Schwermetalle sowie zusätzlich Alkalianteile enthalten, die durch Verdampfung aus der Glasschmelze entweichen.

Aus der DE-C-2 631 220 ist bereits ein elektrisch beheizter Glasschmelzofen für das Einschmelzen bzw. Verglasen von radioaktiven Abfällen bekannt. Nachteilig ist hier aber, daß die durch Unterdurck abgesaugten Gase in bekannter Weise gereinigt, gefiltert oder absorbiert werden sollen, wodurch wiederum radioaktiv verseuchter Abfall anfällt. Das Gemenge für das Glas und das radioaktive Abfallmaterial werden als Schlamm eingegeben, daher ist eine Vorabreinigung der entstehenden Gase nicht möglich und die Energiebilanz dieses Ofens ist für den großtechnischen Einsatz unbefriedigend.

Aus der US-A-4 666 490 ist weiterhin ein Schmelzofen für das Einschmelzen bzw. Verglasen von nicht radioaktiven, gefährlichen Stoffen bekannt, bei welchem ein flüssiges Gemenge in den Ofen eingegeben wird. Flüssigkeit aus dem nachgeschalteten Gaswäscher für das austretende Gas wird ebenfalls in den Glasschmelzofen eingeführt, eine Möglichkeit für die Behandlung und Vorerhitzung von festen Bestandteilen, wie Müllverbrennungsasche, besteht aber nicht.

Aus der US-A-4 652 289 ist weiterhin ein Verfahren zur Reinigung von Gasen aus einem Schmelzofen bekannt, bei dem die Gase durch eine mit Sand gefüllte Kolonne geführt werden. Eine Durchführung durch die einzuschmelzenden Gefahrenstoffe ist nicht vorgesehen, das gleiche gilt für die Zuschlagstoffe, um ein Gemenge zum Erschmelzen von Glas zu erhalten. Wenn die Menge der zu verglasenden Gefahrstoffe und der Zuschlagstoffe erheblich sind, wird die Energiebilanz dieses Ofens ebenfalls unbefriedigend. Die mit Sand gefüllte Kolonne kann weiterhin SO₂ und einige andere Schadstoffe nicht adsorbieren.

Es stellt sich daher die Aufgabe, ein Verfahren der eingangs genannten Art zu schaffen, das eine bessere Umweltverträglichkeit aufweist und das Schwermetalle enthaltenden Abfallstoffen ausschließt und bei welchem die beim Aufschmelzen der Verbrennungsasche entstehenden Stoffe in möglichst geringem Maße oder überhaupt nicht deponiert werden müssen. Weiterhin stellt sich die Aufgabe, eine Vorrichtung zur Durchführung des Verfahrens anzugeben.

Die Lösung der Aufgabe gelingt erfindungsgemäß durch ein Verfahren gemäß Patentanspruch 1.

Mit dem neuen Verfahren wird ein bisher als sehr problematisch geltender Abfallstoff, nämlich Müllverbrennungsasche auf umweltverträgliche Weise zu Glas umarbeitbar, obwohl derartige Aschen sehr heterogen mit hohen und schwankenden Anteilen insbesondere an Kohlenstoff, Quecksilber, Blei, Zinn, Zink, Calcium, Chloriden und Halogeniden zusammengesetzt sind. Ein großer Teil der Schadstoffe aus der Müllverbrennungsasche geht unmittelbar in die Glasschmelze über und wird somit fest eingebunden. In Gasform entweichende Schadstoffe Herden weitgehend durch die Abkühlung innerhalb des aufzuschmelzenden Gemenges kondensiert und wieder dem Schmelzzugang zugeführt. Die danach verbleibenden, nur noch in relativ geringer Menge anfallenden kalten Abgase werden in der abschließenden Gasreinigung unschädlich gemacht.

Eine Weiterbildung des Verfahren sieht vor, daß das aus dem schmelzenden Gemenge austretende heiße Abgas für eine Zeit von wenigstens 1,5 s auf eine Temperatur von wenigstens 1200°C nacherhitzt wird, danach unter teilweiser Kondensation auf eine Temperatur zwischen 200 bis 300°C vorgekühlt, anschließend in das aufzuschmelzende Gemenge zurückgeführt und dort unter weiterer Kondensation auf 20 bis 50°C abgekühlt wird, und daß die bei der Vorkühlung anfallenden Kondensationsprodukte in das aufzuschmelzende Gemenge zurückgeführt und/oder abgezogen werden. Durch das Nacherhitzen des Abgases werden in diesem eventuell vorhandene Dioxine und/oder Furane sicher zerstört, wobei die Mindesttemperatur und -verweilzeit selbstverständlich so gewählt sind, daß diese sicher für die gewünschte Zerstörung ausreichen. Das danach abgezogene heiße Abgas enthält dann im wesentlichen nur noch Chloride, Sulfate, Kohlendioxid sowie Alkali-und Schwermetalldämpfe. Dieses heiße Abgas wird bei der folgenden Vorkühlung auf 200 - 300°C teilweise kondensiert und damit in seiner Menge sowie der Zahl seiner Inhaltsstoffe reduziert. Die anfallenden Kondensationsprodukte werden durch die vorgesehene Rückführung in das aufzuschmelzende Gemenge im geschlossenen Kreislauf gehalten und nach und nach in das Glas überführt, wobei nach einer Einlaufphase ein Gleichgewichtszustand erreicht wird, in welchem die Menge der Kondensationsprodukte im wesentlichen konstant bleibt. Mit der Durchleitung des vorgekühlten Abgases durch das aufzuschmelzende Gemenge wird erreicht, daß auch erst bei niedrigen Temperaturen kondensierende Dämpfe, wie Schwermetall-Dämpfe und insbesondere Quecksilberdampf, sich an den Gemengeteilchen anlagern und so wieder dem Schmelzvorgang zugeführt werden. Aufgrund der starken Abkühlung des Abgases auf seinem Weg durch das Gemenge werden hier Chloride und Sulfate praktisch vollständig auskondensiert. Falls mehr Chloride und Sulfate verdampft werden als anschließend nach der Rückführung der kondensierten Produkte in der Glasschmelze gelöst werden können, tritt eine Anreicherung dieser Stoffe im Gemenge ein. Um dies zu vermeiden, wird zweckmäßig zumindest der überschüssige Teil der bei der Vorkühlung anfallenden Kondensationsprodukte ausgeschleust. Diese Kondensationsprodukte sind im wesentlichen feste Produkte. Das hiernach verbleibende kalte Abgas enthält dann fast ausschließlich noch Chlorwasserstoff (HCl) und Schwefeldioxid (SO₂) in höherer Konzentration. Das Volumen des dann noch verbleibenden kalten Abgases ist dabei, bezogen auf den Durchsatz an Müllverbrennungsasche, relativ klein. Zudem ist die hier vorliegende relativ hohe Konzentration und einfache Zusammensetzung des kalten Abgases von Vorteil für die nachfolgende, abschließende Gasreinigung. Die Gasreinigung erfordert nur eine relativ geringe Kapazität und liefert zudem vergleichsweise reine Abscheidungsprodukte, insbesondere Natriumchlorid und Natriumsulfat, die z. B. für die Herstellung von Soda verwendet werden können. Die für das Aufschmelzen erforderliche Wärmeenergie wird dabei bevorzugt elektrisch erzeugt, da hierdurch eine die spätere Abgasbehandlung erschwerende Beimengung von Verbrennungsgasen aus mit fossilen Brennstoffen betriebenen Heizbrennern in das aus dem schmelzenden Gemenge stammende Abgas vermieden wird.

Das neue Verfahren ist sowohl in einem hohem Maße umweltverträglich als auch wirtschaftlich, da es zum einen den Ausstoß von Abgas weitestgehend vermindert und da es zum anderen verwertbare Rohstoffe liefert, nämlich Glaskörper, die z. B. als Baustoff oder Baustoff-Zuschlag verwendet werden können, und das erwähnte Natrium-Chlorid und -Sulfat. Ein Ausstoß von Dioxinen und/oder Furanen ist bei der Weiterbildung des neuen Verfahrens ausgeschlossen.

Eine Ausgestaltung dieser Weiterbildung sieht vor, daß die Nacherhitzung des heißen Abgases in einem separaten Nacherhitzer erfolgt. Diese Verfahrensvariante ist zwar hinsichtlich der Energiebilanz nicht so günstig, ist jedoch mit relativ geringem Aufwand hinsichtlich der Schmelzeinrichtung durchführbar und bietet darüber hinaus den Vorteil, daß das ganze Glasbad mit Gemenge abgedeckt werden kann, sodaß ein großer Teil der Alkali- und Schwermetalldämpfe bereits in der Gemengedecke im Schmelzofen kondensiert.

Eine alternative, besonders energiegünstige Ausgestaltung des Verfahrens sieht vor, daß die Glasschmelze auf einem Teil ihrer Oberfläche gemengefrei gehalten wird und daß das heiße Abgas nach dem Austreten aus dem schmelzenden Gemenge über den gemengefreien Teil der Oberfläche der Glasschmelze geleitet und durch Wärmeaufnahme aus der Glasschmelze nacherhitzt wird.

Eine weitere Alternative des Verfahrens sieht vor, daß das aus dem aufzuschmelzenden Gemenge austretende kalte Abgas für eine Zeit von wenigstens 1,5 s auf eine Temperatur von wenigstens 1200°C nacherhitzt wird und danach dem Schadgas-Reinigungsverfahren zugeführt wird. Auch hier ist sichergestellt, daß Dioxine und/oder Furane nicht in die Umwelt gelangen können, sondern durch entsprechende Erhitzung des Abgases zerstört werden.

Als letzte Alternative hinsichtlich der Nacherhitzung der Abgase sieht das Verfahrens schließlich noch vor, daß das aus dem Schadgas-Reinigungsverfahren austretende Abgas für eine Zeit von wenigstens 1,5 s auf eine Temperatur von wenigstens 1200°C nacherhitzt wird. Auch hierdurch wird die gewünschte Zerstörung von Dioxinen und/oder Furanen erreicht. Die Auswahl der jeweils anzuwendenden Verfahrensvariante liegt im Ermessen des Fachmannes und richtet sich nach den Erfordernissen und Gegebenheiten des Einzelfalles.

Um den Wärmeübergang aus der Glasschmelze in das aufzuschmelzende Gemenge zu verbessern, ist vorgesehen, daß auf dem mit Gemenge bedeckten Teil der Oberfläche der Glasschmelze eine flüssige Alkalisalz- oder Erdalkalisalz-Galleschicht erzeugt und durch bedarfsweisen Abzug in einem Schichtdickenbereich zwischen 2 und 5 cm gehalten wird. Neben einer Beschleunigung des Schmelzvorganges wird eine Einbindung eines Teils der aus dem schmelzenden Gemenge austretenden Schadstoffe in die Galleschicht erreicht, so daß das Abgas entsprechend weniger belastet wird. Die bedarfsweise abgezogene, mit Schadstoffen angereicherte Alkalisalz-Galle kann nach Abkühlung und Verfestigung z. B. dem Prozeß wieder zugeführt werden, wobei die Schadstoffe aus der Galleschicht nach und nach in die Glasschmelze übergehen.

Bevorzugt ist dabei vorgesehen, daß als Galleschicht eine im wesentlichen aus Natriumsulfat oder -chlorid oder Kaliumsulfat oder -chlorid oder Lithiumsulfat oder -chlorid oder aus einem Gemisch von diesen bestehende Galleschicht verwendet wird und daß diese Galleschicht während des Schmelzvorganges durch Umsetzen aus Kalziumsulfat, Kalziumchlorid, Magnesiumsulfat und/oder Magnesiumchlorid erzeugt wird, welches mit der Müllverbrennungsasche und/oder als gesonderter Zuschlagstoff zum Gemenge dem Schmelzvorgang zugeführt wird. Alternativ sieht das Verfahren vor, daß bei hohen Schmelztemperaturen und/oder bei Alkalimangel eine Kalziumsulft- und/oder Magensiumsulfat-Galleschicht verwendet wird und daß diese Galleschicht unmittelbar aus mit dem Gemenge oder als gesonderter Zuschlagstoff zugegebenem Kalziumsulfat und/oder Magnesiumsulfat erzeugt wird. Die aufzuwendenden Zusatzkosten werden so sehr niedrig gehalten, so daß sie im Verhältnis zu den bei der Abgasreinigung eingesparten Kosten gering sind. Damit wird das Verfahren insgesamt kostengünstiger durchführbar.

Hinsichtlich weiterer Zuschlagstoffe sieht das Verfahren vor, daß SiO₂-haltige Stoffe, insbesondere Sand und/oder Phonolit, eingesetzt werden. Diese Zuschlagstoffe sind einfach handhabbar und kostengünstig. Alternativ oder ergänzend können auch Glasscherben als SiO₂-haltiger Zuschlagstoff eingesetzt werden.

Außerdem sieht das Verfahren noch vor, daß das aus dem schmelzenden Gemenge austretende sowie das heiße Abgas unter Unterdruck abgeführt und vorgekühlt wird, daß das vorgekühlte Abgas unter Überdruck gesetzt wird und daß die Durchleitung des Abgases durch das aufzuschmelzende Gemenge im Gegenstrom zu diesem sowie derart geregelt erfolgt, daß der Druck des aus dem aufzuschmelzenden Gemenge austretenden kalten Abgases im wesentlichen gleich dem Umgebungsluftdruck ist. Hierdurch wird zum einen erreicht, daß aus dem schmelzenden Gemenge austretendes Abgas auf keinen Fall in die Umgebung gelangen kann; zum anderen wird für einen ausreichenden Durchsatz von vorgekühltem Abgas durch das aufzuschmelzende Gemenge gesorgt. Schließlich wird so noch erreicht, daß bei der Gemengeerzeugung weder in nennenswertem Maße Abgas in die Umgebung noch Falschluft in das Abgas gelangen kann.

Um die Menge der zu deponierenden Stoffe möglichst gering zuhalten, kann in der Gasreinigung anfallender Staub und/oder Schlamm dem Gemenge zugemischt werden.

Um absolut unschädliches Reingas zu erhalten, wird das Abgas nach der Gasreinigung vorteilhaft durch einen Aktivkohlefilter geleitet und um die Abgasbehandlung zu vereinfachen, kann vorteilhaft das Abgas vor oder nach der Gasreinigung abgekühlt werden.

Die Lösung des zweiten Teils der Aufgabe gelingt erfindungsgemäß durch eine Vorrichtung gemäß dem Patentanspruch 15.

Diese Vorrichtung ermöglicht eine sichere, kontinuierliche und umweltverträgliche Durchführung des zuvor beschriebenen Verfahrens.

Vorteilhafte Ausgestaltungen und Weiterbildungen der Vorrichtung sind in den Unteransprüchen 16 bis 32 angegeben.

Ausführungsbeispiele der Vorrichtung sowie ein Ablaufbeispiel des Verfahrens werden im folgenden anhand einer Zeichnung erläutert. Die Figuren der Zeichnung zeigen:
- Figure 1: eine Vorrichtung zur Durchführung des Verfahrens gemäß Erfindung in schematischer Schnittdarstellung in einer ersten Ausführung,
- Figure 2 bis 4: jeweils die Vorrichtung in geänderter Ausführung,
- Figur 5: eine Gasreinigungseinrichtung als Teil der Vorrichtung gemäß Figuren 1 bis 4 in einer ersten Ausführung in schematischer Blockdarstellung,
- Figur 6: die Gasreinigungseinrichtung in einer zweiten Ausführung, ebenfalls in schematischer Blockdarstellung und

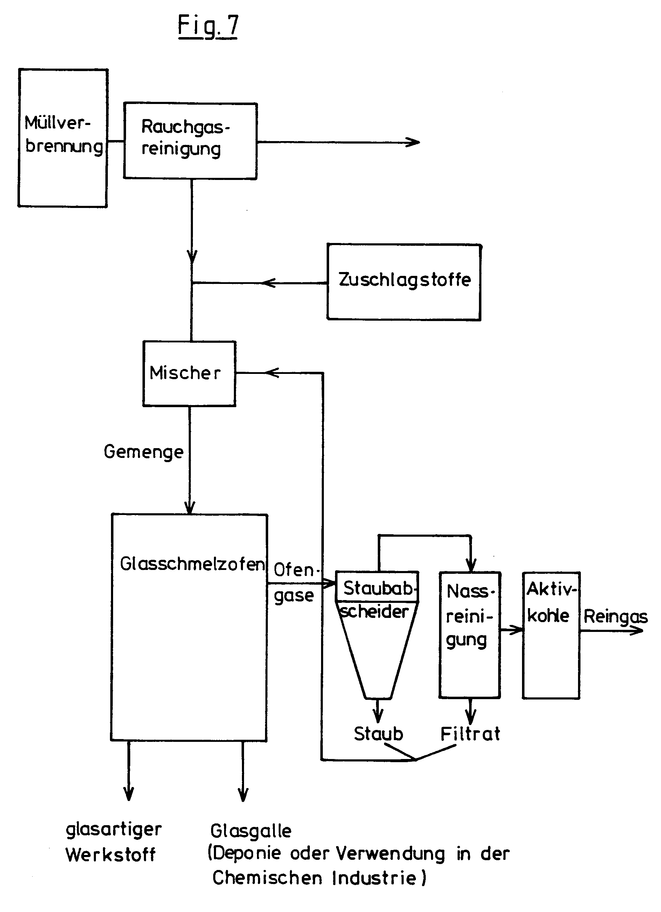

- Figur 7: die Blockdarstellung der Stoffrückführung aus der Abgasreinigung.

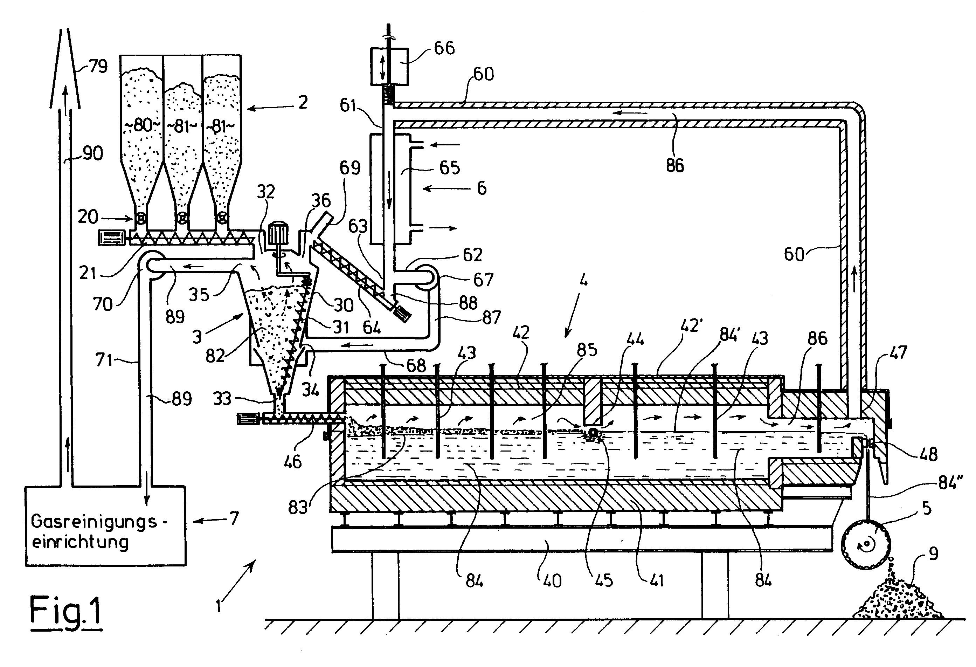

Wie die Figur 1 der Zeichnung zeigt, besteht das erste dargestellte Ausführungsbeispiel der Vorrichtung 1 im wesentlichen aus den folgenden Komponenten:
einer Anordnung von Vorratsbehältern 2, einem Gemengemischer 3, einem Glasschmelzofen 4, einer Glasverarbeitungsmaschine 5, einem Abgaskühler 6 und einer Gasreinigungseinrichtung 7.

Die Vorratsbehälter 2 dienen zur Aufnahme und Speicherung von einerseits Müllverbrennungsasche 80 und andererseits Zuschlagstoffen 81. An ihrem unteren Ende weisen die Vorratsbehälter 2 jeweils eine Dosierschleuse 20, z. B. eine Zellenradschleuse, auf. Diese Dosierschleusen 20 münden in eine gemeinsame Fördereinrichtung 21, hier ein Schnekkenförderer, der in den oberen Teil des Gemengemischers 3 mündet. Der Gemengemischer 3 besitzt ein im wesentlichen trichterförmiges, nach unten enger werdendes Gehäuse 30 sowie eine in diesem Gehäuse 30 angeordnete Mischerschnecke 31. Die Mischerschnecke 31 verläuft parallel zur Innenseite der seitlichen Wandung des Gehäuses 30 und ist sowohl um ihre eigene Achse als auch um eine zentral in vertikaler Richtung durch das Gehäuse 30 des Gemengemischers 3 verlaufende Achse drehbar. Im oberen Teil des Gehäuses 30 ist ein Feststoffeinlaß 32 vorgesehen, der mit der zuvor erwähnten Fördereinrichtung 21 verbunden ist. Am unteren Ende des Gehäuses 30 des Gemengemischers 3 ist ein Feststoffauslaß 33 vorgesehen, der in eine Gemengeaufgabevorrichtung 46 mündet. Die Gemengeaufgabevorrichtung 46 bildet bereits einen Teil des Glasschmelzofens 4. Der Glasschmelzofen 4 besteht aus einer Wanne 41 aus Feuerfestmaterial, die nach oben durch einen Oberbau 42, ebenfalls aus Feuerfestmaterial, abgedeckt ist. Die Wanne 41 und der Oberbau 42 ruhen auf einer Tragkonstruktion 40, die hier aus Stahlträgern gebildet ist. Außenseitig ist der Oberbau 42 des Glasschmelzofens 4 von einem gasdichten Mantel 42′ umgeben, der aus Stahlblech besteht und der bis zum oberen Rand der Wanne 41 reicht und dort mit dieser dichtend verbunden ist. Von oben her sind, durch den Oberbau 42 und den Mantel 42′ verlaufend, Heizelektroden 43 gasdicht in das Innere des Glasschmelzofens 4 geführt. Das Innere des Glasschmelzofens 4 ist in zwei unterschiedliche Bereiche aufgeteilt, nämlich einen Schmelzteil, der in der Figur 1 links liegt, und einen Erhitzungsteil, der in der Figur 1 rechts liegt. Die Aufteilung des Glasschmelzofens 4 in die beiden genannten Bereiche erfolgt durch einen als Teil des Oberbaus 42 ausgebildeten, von diesem nach unten vorragenden, abgehängten scheitrechten Bogen 44, der im Betrieb des Glasschmelzofens 4 bis knapp über die Oberfläche 84′ einer in dem Ofen 4 befindlichen Glasschmelze 84 reicht und eine vertikale Trennwand für den Gasraum des Ofens 4 bildet. Weiterhin ist unterhalb des Bogens 44 ein parallel zu diesem quer durch den Glasschmelzofen 4 verlaufendes Kühlmittelrohr 45 vorgesehen, welches genau in Höhe der Oberfläche 84′ der Glasschmelze 84 liegt und dazu dient, die Glasschmelze 84 in der Umgebung des Rohres 45 zum Erstarren zu bringen. Am rechten Ende des Glasschmelzofens 4 ist ein Glasschmelzeauslauf 48 vorgesehen, dem eine hier nur schematisch dargestellte Glasverarbeitungsmaschine 5 nachgeschaltet ist. Ebenfalls am rechten Ende des Glasschmelzofens 4 ist schließlich noch eine durch den Oberbau 42 nach oben verlaufende Abgas-Abzugsöffnung 47 vorhanden.

Mit der Abgas-Abzugsöffnung 47 der Glasschmelzofens 4 ist eine wärmeisolierte Gasleitung 60 verbunden, die zum Gaseingang 61 des Abgaskühlers 6 führt. Außer dem Gaseingang 61 weist der Abgaskühler 6 einen Gasausgang 62 sowie einen Auslaß 63 für Kondensationsprodukte auf, wobei Gasausgang 62 und Auslaß 63 am unteren Ende des Abgaskühlers 6 angeordnet sind. Weiterhin weist der Abgaskühler 6 Mittel 65 zur Führung sowie zur Zuführung und Abführung eines Kühlmittels, z. B. Kühlwasser oder Kühlluft, auf. Oberhalb des Abgaskühlers 6 ist eine mechanische Reinigungsvorrichtung 66 angedeutet, mittels welcher die abgasführenden Teile des Abgaskühlers 6 kontinuierlich oder periodisch von den dort infolge der Abgas-Abkühlung anfallenden Kondensationsprodukten gereinigt werden können. Der zugehörige Auslaß 63 des Abgaskühlers 6 für die Kondensationsprodukte ist über eine weitere Fördereinrichtung 64, hier ebenfalls ein Schneckenförderer, mit der Aufgabeseite des Gemengemischers 3, d. h. dem oberen Teil von dessen Innerem, verbunden. Der obere Teil des Gehäuses 30 des Gemengemischers 3 weist hierzu eine einen Einlaß 36 für die Kondensationsprodukte darstellende Öffnung auf. Über eine Weiche 69 am oberen Ende der Fördereinrichtung 64 können bedarfsweise die Kondensationsprodukte zum Teil oder gänzlich ausgeschleust werden.

Dem Gasausgang 62 des Abgaskühlers 6 ist ein erstes Sauggebläse 67 nachgeordnet, welches ausgangsseitig mit einer Verbindungsleitung 68 verbunden ist. Diese Verbindungsleitung 68 führt zu einem Gaseinlaß 34 des Gemengemischers 3, wobei der Gaseinlaß 34 im unteren Teil des Gehäuses 30 angeordnet und so ausgebildet ist, daß zwar ein Eintritt von Gas in das Innere des Gehäuses 30 möglich ist, jedoch ein Austritt von Gemenge aus dem Inneren des Gehäuses 30 in die Leitung 68 ausgeschlossen ist.

An dem dem Gaseinlaß 34 entgegengesetzten Ende, d. h. am oberen Ende des Gemengemischers 3, ist ein Gasauslaß 35 vorgesehen, dem ein zweites Sauggebläse 70 nachgeschaltet ist. Dabei sind das erste Sauggebläse 67 und das zweite Sauggebläse 70 in ihrer Leistung regelbar, wozu sie vorzugsweise mit einer gemeinsamen Steuereinrichtung verbunden sind.

Von dem Ausgang des zweiten Sauggebläses 70 führt eine Gasleitung 71 zu der Gasreinigungseinrichtung 7, die mit an sich bekannten Komponenten ausgebildet sein kann und die deshalb hier nicht näher ausgeführt ist. Ausgangsseitig ist der Gasreinigungseinrichtung 7 schließlich ein Kamin 79 nachgeschaltet.

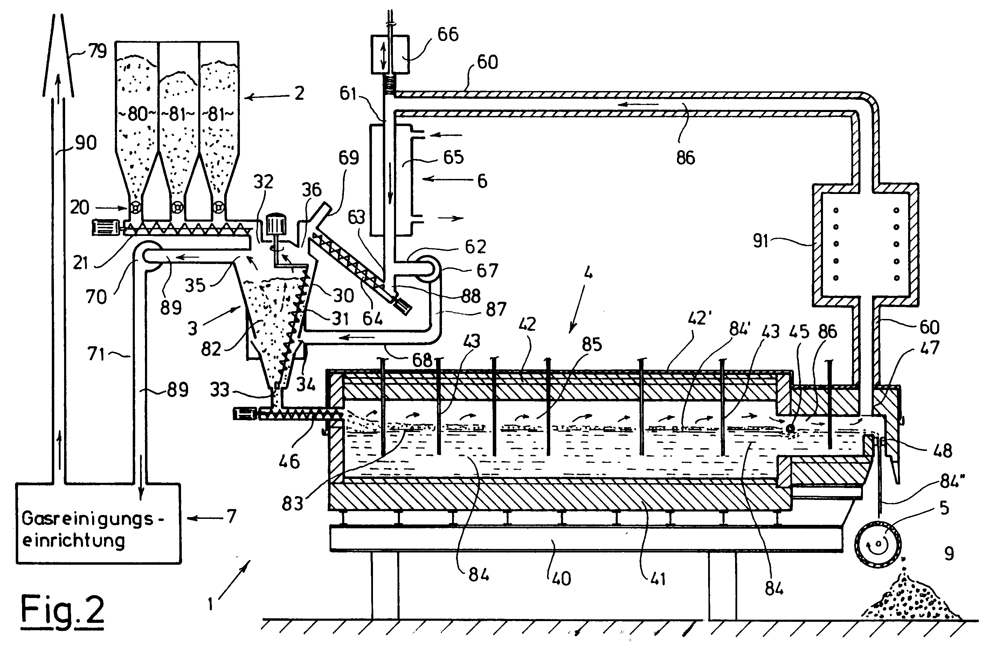

Das in Figur 2 dargestellte Ausführungsbeispiel der Vorrichtung entspricht in seinen wesentlichen Teilen dem zuvor anhand von Figur 1 beschriebenen Ausführungsbeispiel. Im Unterschied zu der Figur 1 ist hier jedoch der Glasschmelzofen 4 etwas anders ausgeführt. Der bei dem zuerst beschriebenen Ausführungsbeispiel im Glasschmelzofen 4 vorhandene Bogen 44 ist bei dem Glasschmelzofen 4 gemäß Figur 2 entfallen, d. h. der Oberbau 42 des Glasschmelzofens 4 ist als durchgehendes Bauteil mit einem einteiligen Ofeninneren ausgebildet. Weiterhin ist das Kühlmittelrohr 45 bei dem Glasschmelzofen gemäß Figur 2 in Richtung zum Auslaufende des Glasschmelzofens 4, d. h. in der Figur 2 nach rechts verschoben. Hierdurch kann sich das auf der Glasschmelze 84 im Inneren des Glasschmelzofens 4 schwimmende Gemenge 83 über annähernd die gesamte Oberfläche der Glasschmelze 84 im Glasschmelzofen 4 ausbreiten. Hierdurch wird erreicht, daß bereits ein großer Teil der aus der Glasschmelze 84 aufsteigenden Gase und Dämpfe in der aufliegenden Gemengedecke kondensiert. Die Abgasmenge wird so vermindert. Gleichzeitig wird die Temperatur des den Glasschmelzofen 4 durch die Öffnung 47 verlassenden Gases vermindert. Sie beträgt hier etwa 300 bis 500°C.

Um auch bei dieser Vorrichtung eine sichere Zerstörung von Dioxinen und/oder Furanen im austretenden Abgas zu gewährleisten, ist in die der Gasabzugsöffnung 47 nachgeschaltete Gasleitung 60 ein separater Gaserhitzer 91 eingesetzt. Dieser Gaserhitzer 91 ist in der Figur 2 lediglich schematisch angedeutet und kann von an sich bekannter Bauart sein. In ihm wird das ankommende Abgas für eine Zeit von wenigstens 1,5 s auf eine Temperatur von wenigstens 1200°C erhitzt.

Der weitere Aufbau der Vorrichtung gemäß Figure 2 entspricht dem Aufbau der Vorrichtung gemäß Figur 1, wobei gleiche Teile der Vorrichtungen mit gleichen Bezugsziffern bezeichnet sind.

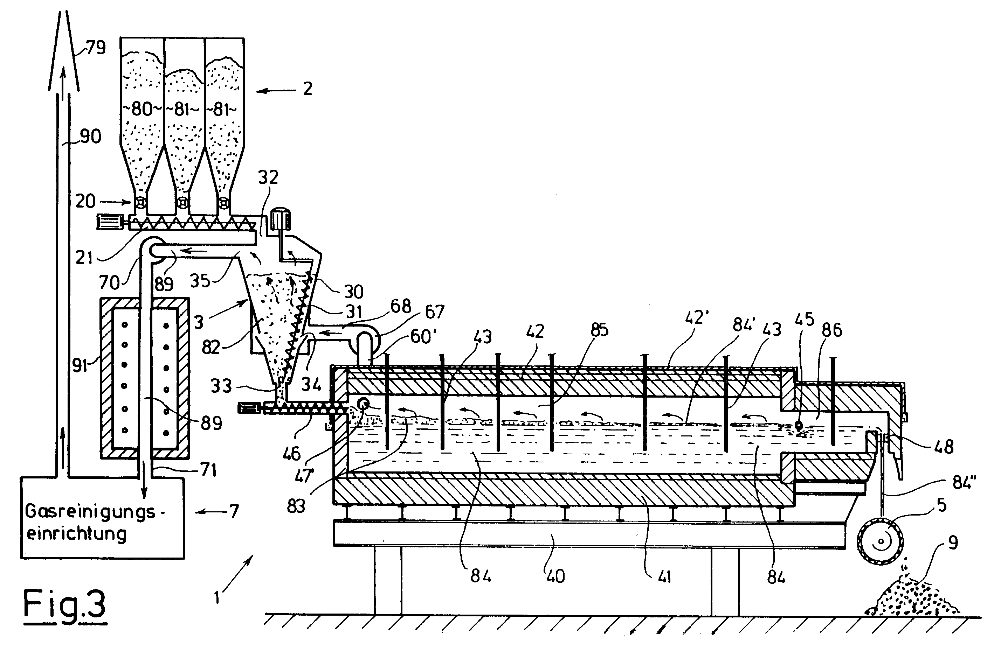

Das dritte Ausführungsbeispiel der Vorrichtung gemäß Figur 3 ist insbesondere dadurch gekennzeichnet, daß der Abgaskühler 6 mit der zugehörigen Gasleitung 60 hier nicht vorhanden ist. Der Glasschmelzofen 4 entspricht hier im wesentlichen dem Glasschmelzofen, wie er in Figur 2 dargestellt ist mit dem Unterschied, daß hier eine Gasabzugsöffnung 47′ am Aufgabeende, d. h. am linken Ende des Glasschmelzofens 4 vorgesehen ist. Diese Gasabzugsöffnung 47′ steht über eine kurze Gasleitung 60′ mit der Ansaugseite des ersten Sauggebläse 67 in Verbindung. Von dort führt die bereits beschriebene Verbindungsleitung 68 zum Gemengemischer 3.

Dieser Gemengemischer 3 ist, da keine Kondensationsprodukte aus dem Abgaskühler zugeführt werden müssen, in seinem oberen Teil ohne die bei den zuvor beschrieben Vorrichtungen vorhandene Aufgabeöffnung 36 ausgebildet.

Die für die sichere Zerstörung von Dioxinen und/oder Furanen erforderliche Erhitzung des Abgases erfolgt hier ebenfalls in einem separaten Gaserhitzer 91, der bei der Vorrichtung gemäß Figur 3 in die vom zweiten Sauggebläse 70 zur Gasreinigungseinrichtung 7 führende Abgasleitung 71 eingeschaltet ist.

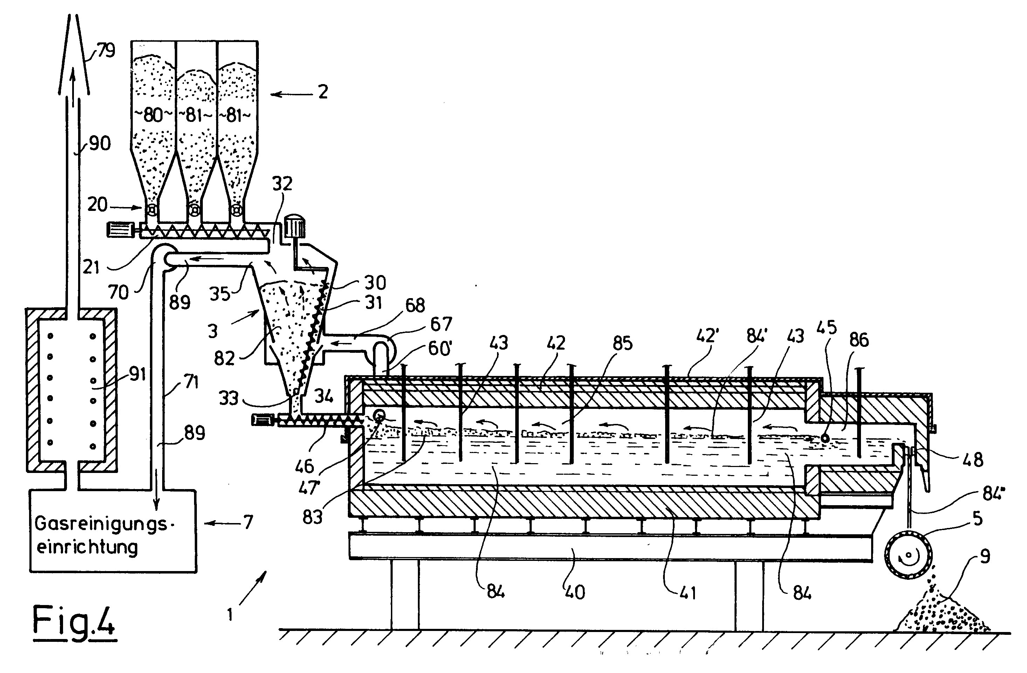

Die letzte dargestellte Variante der Vorrichtung gemäß Figur 4 entspricht weitestgehend dem Ausführungsbeispiel gemäß Figur 3, wobei der Unterschied hier darin liegt, daß der separate Gaserhitzer 91 für die Erhitzung des Abgases und die Zerstörung von eventuell in diesem vorhandenen Dioxinen und/oder Furanen der Gasreinigungseinrichtung 7 nachgeordnet ist und in die zum Kamin 79 führende Gasleitung eingebaut ist. Diese Ausführung der Vorrichtung bietet insbesondere den Vorteil, daß die aufzuheizende Gasmenge hinter der Gasreinigungseinrichtung 7 nur noch etwa 50 % der ursprünglichen Gasmenge beträgt, d. h. es wird Heizenergie eingespart.

Im folgenden soll ein Ablaufbeispiel des mit der zuvor anhand von Figur 1 beschriebenen Vorrichtung durchführbaren Verfahrens beschrieben werden:
Aus einer Müllverbrennungsanlage oder von einer Deponie stammende Müllverbrennungsasche 80 wird dem ersten Vorratsbehälter 2 zugeführt. Die weiteren Vorratshbehälter 2 werden mit erforderlichen Zuschlagstoffen 81, insbesondere Sand und Phonolit sowie ggf. Glasscherben, befüllt. Mittels der Dosierschleusen 20 werden in vorbestimmten Mengenverhältnissen Müllverbrennungsasche 80 sowie die Zuschlagstoffe 81 aus den Vorratsbehältern 2 entnommen und mittels der Fördereinrichtung 21 in das Innere des Behälters 30 des Gemengemischers 3 gefördert. Dort werden die einzelnen Bestandteile mittels der Mischerschnecke 31 zu einem homogenen, aufzuschmelzenden Gemenge 82 gemischt. Fertiges, aufzuschmelzendes Gemenge 82 wird durch den Feststoffauslaß 33 des Gemengemischers 3 mittels der Gemengeaufgabevorrichtung 46 in das Innere des Glasschmelzofens 4 gefördert. Im laufenden Betrieb ist der Glasschmelzofen 4 bis zu einer bestimmten Höhe mit Glasschmelze 84 gefüllt. Dabei liegt die Oberfläche 84′ der Glasschmelze 84 genau in Höhe des Kühlmittelrohres 45 und knapp unterhalb des Bogens 44.

Das von der Gemengeaufgabevorrichtung 46 zugeführte Gemenge schwimmt als schmelzendes Gemenge 83 auf der Glasschmelze 84 und verteilt sich auf dessen Oberfläche 84′ im Schmelzteil, d. h. in Figur 1 linken Teil, des Glasschmelzofensofens 4. Da die Glasschmelze 84 in der Umgebung des Kühlmittelrohres 45 mittels des durchströmenden Kühlmittels zum Erstarren gebracht wird, kann das schmelzende Gemenge 83 nicht in den Teil des Glasschmelzofens jenseits des Bogens 44 und des Kühlmittelrohres 45 gelangen. Die für das Aufschmelzen des aufzuschmelzenden Gemenges 83 erforderliche Wärmeenergie wird dabei mittels der Heizelektroden 43, die mit ihrem unteren Teil in die Glasschmelze 84 ragen, als Joulsche Energie in der Glasschmelze 84 erzeugt, wobei die Glasschmelze 84 den Ohmschen Widerstand bildet.

Während des Aufschmelzens des Gemenges 83 steigen Abgase 85 aus diesem auf, wobei das Abgas hier eine Temperatur zwischen etwa 100 und 1000°C aufweist und im wesentlichen SOuu2u, HCl, Chloride, Sulfate, Kohlendioxid, Alkali- und Schwermetalldämpfe sowie Dioxine und/oder Furane enthalten kann.

Dieses Abgas 85 tritt durch den Spalt zwischen der Unterseite des Bogens 44 und dem Kühlmittelrohr 45 in den rechten Teil des Inneren des Glasschmelzofens 4 ein. In diesem Teil des Glasschmelzofens 4 ist die Oberfläche 84′ der Glasschmelze 84 gemengefrei. Die in diesem Teil des Glasschmelzofens 4 befindliche Glasschmelze 84 hat eine Temperatur von etwa 1400°C. Die Temperatur im oberen Teil des Glasschmelzofens 4 oberhalb der Schmelze 84 beträgt hier demnach wenigstens etwa 1300 - 1350°C. Um hier eine möglichst hohe Temperatur zu erzielen, ist zweckmäßig der Oberbau 42 des Glasschmelzofens 4 stark wärmeisoliert. Das in diesen Bereich des Glasschmelzofens 4 eintretende Abgas wird nun durch Wärmeaufnahme aus der Schmelze nacherhitzt, wobei durch Einstellung der Strömungsgeschwindigkeit und durch Wahl entsprechender Dimensionen des Glasschmelzofens 4 dafür gesorgt wird, daß die Temperatur des heißen Abgases 86 zumindest für eine Zeit von 1,5 s eine Höhe von mindestens 1200°C erreicht. Hierdurch werden die eventuell in dem ankommenden Abgas 85 enthaltenen Dioxine und/oder Furane sicher zerstört, so daß das heiße Abgas 86 nur noch die Chloride, Sulfate, das Kohlendioxid sowie die Alkali- und Schwermetalldämpfe enthält.

Dieses heiße Abgas 86 wird durch die wärmeisolierte Leitung 60 abgezogen, wobei deren Wärmeisolierung im wesentlichen dazu dient, eine Abkühlung und damit Kondensation des heißen Abgases 86 innerhalb der Leitung 60 zu verhindern. Das heiße Abgas 86 gelangt durch den Gaseingang 61 in den Abgaskühler 6, wo es auf eine Temperatur zwischen 300 und 500°C abgekühlt wird. Dabei kondensiert ein Teil des Abgases und schlägt sich innerhalb des Abgaskühlers 6 nieder. Die anfallenden Kondensationsprodukte 88 werden mittels der Reinigungsvorrichtung 66 periodisch oder kontinuierliche entfernt und dem unterhalb des Abgaskühlers 6 gelegenen Auslaß 63 für die Kondensationsprodukt zugeführt. Von dort werden die Kondensationsprodukte 88 mittels der Fördereinrichtung 64 durch den Einlaß 36 für die Kondensationsprodukte in das Innere des Gemengemischers 3 geführt und somit in das aufzuschmelzende Gemenge 82 rückgeführt. Bei Bedarf können die Kondensationsprodukte 88 über die Weiche 69 ganz oder teilweise ausgeschleust werden.

Das durch den Gasausgang 62 aus dem Abgaskühler austretende vorgekühlte Abgas 87 gelangt zu dem ersten Sauggebläse 67. Dieses sorgt dafür, daß auf seiner Ansaugseite, d. h. innerhalb des Abgaskühlers 6, in der Leitung 60 sowie im Inneren des Glasschmelzofens 4, ein Unterdruck gegenüber dem Umgebungsluftdruck herrscht. Förderseitig sorgt das Sauggebläse 67 dafür, daß das aus diesem austretende, vorgekühlte Abgas 87 innerhalb der Verbindungsleitung 68 zum Gemengemischer 3 einen Überdruck gegenüber dem Umgebungsluftdruck erhält. Dieses unter einem Überdruck stehende vorgekühlte Abgas 87 wird durch den Gaseinlaß 34 in das aufzuschmelzende Gemenge 82 im Inneren des Gemengemischers 3 geleitet. Während des Durchströmens des Abgases 87 kühlt sich dieses unter weiterer Kondensation auf eine Temperatur von etwa 20 - 50°C ab und tritt an der Oberfläche des aufzuschmelzenden Gemenges 82 als kaltes Abgas aus. Die Mischerschnecke 31 sorgt dabei außer für eine Durchmischung der einzelnen Bestandteile des aufzuschmelzenden Gemenges 82 dafür, daß letzteres locker und gasdurchlässig bleibt. Aufgrund der starken Abkühlung kondensieren innerhalb des aufzuschmelzenden Gemenges 82 auch niedrig kondensierende Dämpfe, wie z. B. Schwermetalldämpfe. Das durch den Gasauslaß 35 des Gemengemischers 3 austretende kalte Abgas 89 enthält dann im wesentlichen nur noch HCl und SO₂.

Das dem Gasauslaß 35 nachgeschaltete zweite Sauggebläse 70 sorgt dabei im Zusammenwirken mit einer entsprechenden Steuereinheit sowie Drucksensoren dafür, daß der Druck des kalten Abgases 89 im oberen Teil des Gemengemischers 30 im wesentlichen gleich dem Umgebungsluftdruck bleibt.

Dies sorgt dafür, daß weder Abgase in die Umgebung noch Falschluft in das System gelangen kann.

Das kalte Abgas 89, im wesentlichen ein konzentriertes Gas aus Chloriden und SO₂ sowie SO₃, wird über die Leitung 71 der Gasreinigungseinrichtung 7 zugeführt und dort weiter gereinigt. Die aus der Gasreinigungseinrichtung noch austretenden verbleibenden Rest-Abgase 90, insbesondere N₂, CO₂ und geringe Mengen Sauerstoff werden schließlich durch den Kamin 79 in die Umgebung entlassen. Dabei ist eine Gefährdung oder Schädigung der Umwelt aufgrund der das Rest-Abgas 90 bildenden, relativ harmlosen Bestandteile ausgeschlossen.

Außer dem Rest-Abgas 90 liefert die Vorrichtung 1 gemäß dem dargestellten Ausführungsbeispiel nach dem beschriebenen Verfahren als wiederverwendbaren Rohstoff Glaskörper 9, die mittels der Glasverarbeitungsmaschine 5 aus der auslaufenden Glasschmelze 84˝ in kontinuierlicher Fertigung hergestellt werden. Diese Glaskörper 9 können beispielsweise als Schotter oder Betonzuschlag verwendet werden.

Die Größe des Glasschmelzofens 4 und damit das Volumen der in ihm befindlichen Glasschmelze 84 werden zweckmäßig so groß gewählt, daß auftretende Schwankungen in der Zusammensetzung der Müllverbrennungsasche das erschmolzene Glas nicht kurzfristig in seinem Chemismus vollständig verändern können. Auftretende Änderungen in der Zusammensetzung der Glasschmelze 84 können sehr schnell z. B. anhand der Änderungen des elektrischen Widerstandes der Glasschmelze 84 zwischen den Elektroden 43 erkannt werden. Diese Meßwerte können dann zur Regelung der Mischung der Müllverbrennungsasche 80 und der einzelnen Zuschlagstoffe 81, insbesondere eines Zuschlagstoffes mit einem gewissen Alkaligehlat, z. B. Phonolit, verwendet werden.

Eine weitere Möglichkeit der Korrektur der Zusammensetzung der Glasschmelze 84 besteht darin, daß die Kristallisationserscheinungen am fertigen Glasprodukt beobachtet werden. Spezifische Glaszusammensetzungen im Grenzbereich bilden bestimmte Kristalle, welche leicht im fertigen Glas erkannt werden können und die angeben, ob und nach welcher Seite sich die Zusammensetzung des Glases verändert hat. Dementsprechend können die Mengen der zu mischenden Müllverbrennungsasche 80 und Zuschlagstoffe 81 variiert werden.

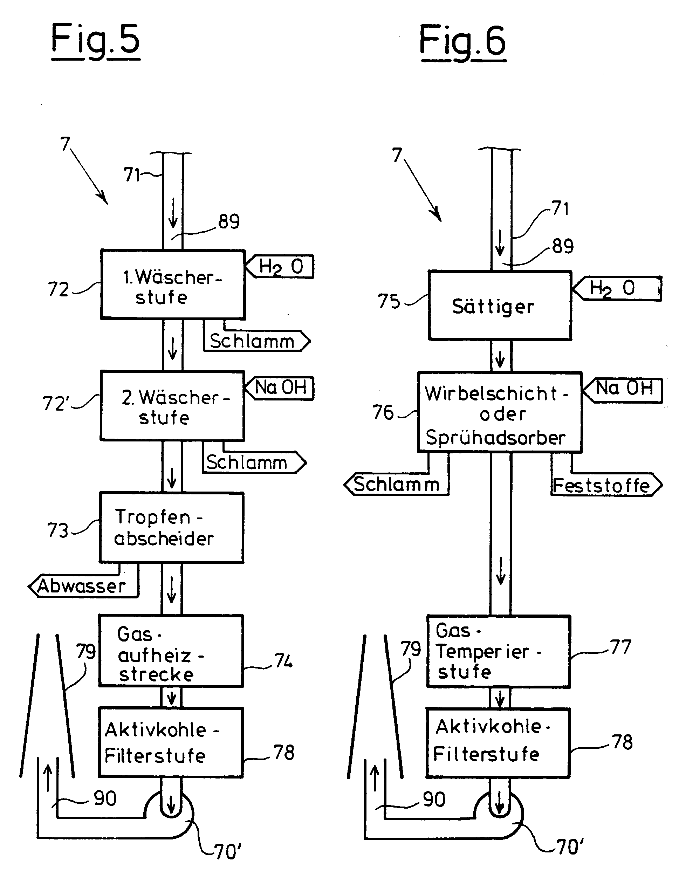

Anhand der Figuren 5 und 6 sollen im folgenden zwei Ausführungsbeispiele für die Gasreinigungseinrichtung 7 erläutert werden, wobei die Figur 5 eine Naß-Gasreinigungseinrichtung 7 und die Figur 6 eine Trocken- bzw. Halbtrocken-Gasreinigungseinrichtung 7 zeigt.

Gemäß Figur 5 gelangt das kalte Abgas 89 durch die Leitung 71 zu einer ersten Wäscherstufe 72. In dieser ersten Wäscherstufe wird insbesondere HCl aus dem Abgas ausgewaschen. In einer zweiten Wäscherstufe 72′ wird nachfolgend insbesondere SO₂ ausgewaschen. In einem nachfolgenden Tropfenabscheider 73 werden mitgerissene Wassertropfen abgeschieden. In einer Gas-Aufheizstrecke 74 wird das Gas auf eine geeignete Temperatur zwischen 30 und 90°C erwärmt und anschließend einer Aktivkohle-Filterstufe 78 zugeführt. Nach deren Durchlaufen gelangt das Rest-Abgas 90, im wesentlichen zusammengesetzt aus N₂, CO₂ und geringen Mengen Sauerstoff durch den Kamin 79 in die Umgebung.

In der ersten Wäscherstufe 72 für die HCl-Abscheidung ist ein pH-Wert im sauren Bereich, vorzugsweise < 1 einzustellen. Die zweite Wäscherstufe 72′ für die SO₂-Abscheidung wird dagegen vorzugsweise basisch mit pH-Werten von z. B. 6 - 7,5 betrieben. Die beiden Wäscherstufen 72 und 72′ werden vorzugsweise im Gegenstrom betrieben, können aber auch im Gleichstrom betrieben werden. Eventuell noch vorhandene Quecksilbermengen im Abgas 89 werden vollständig in der Aktivkohle-Fiterstufe 78 abgeschieden. Die aus den Wäscherstufen 72 und 72′ sowie dem Tropfenabscheider 73 abgegebenen Ausstoßmengen an Abwasser und Schlamm werden zweckmäßig einer Abwasser-Reinigungsanlage zugeführt.

Das zweite Ausführungsbeispiel der Gasreinigungseinrichtung 7 gemäß Figur 2b besitzt als erste Komponente einen Sättiger 75, dem das kalte Abgas 89 ebenfalls über die Leitung 71 zugeführt wird. Nach Sättigung des Abgases im Sättiger 75 wird es einem Wirbelschicht- oder Sprühadsorber 76 zugeführt. Der Sprühadsorber wird vorzugsweise mit NaOH oder Ca(OH)₂ in wässriger Lösung beaufschlagt. Das austretende Gas wird in einer Gas-Temperierstufe 77 auf die für die auch hier folgende Aktivkohle-Filterstufe 78 optimale Temperatur gebracht. Das letztendlich austretende Restabgas 90 gelangt auch hier wieder durch den Kamin 79 in die Umgebung.

Das hier anfallende Abwasser sowie die hier anfallenden Feststoffe werden ebenfalls einer weiteren Reinigungseinrichtung, z. B. Abwasser-Reinigungsanlage, bzw. Deponierung oder Wiederverwendung zugeführt.

Aufgrund der relativ einfachen, definierten Zusammensetzung des Abgases 89 können die Gasreinigungseinrichtungen 7 zur Rückgewinnung von Natriumchlorid und Natriumsulfat in relativ reiner Form dienen. Diese Rohstoffe wiederum können für die Herstellung z. B. von Soda verwendet werden.

Wie bereits beschrieben, wird das in relativ geringen Mengen anfallende Abgas entweder direkt oder nach dem Durchleiten durch das Gemenge der Staubabscheidung in einem Staubabscheider zugeführt und danach in einer Naßreinigung gereinigt. In einer weiteren Stufe wird das Abgas dann durch einen Aktivkohlefilter durchgeführt, wobei das daraufhin entstehende Reingas ohne weiteres in die Atmosphäre abgelassen werden kann, da es keine umweltbelastenden Partikel oder Gasanteile mehr enthält.

Es ist für den Fachmann überraschend, daß eine wesentliche Verringerung der Umweltbelastung erfindungsgemäß dadurch erreicht werden kann, daß sowohl der abgeschiedene Staub als auch das Filtrat aus der Naßeinrichtung beziehungsweise die Schlämme aus der Gasreinigung dem Gemenge aus Zuschlagstoffen und Müllverbrennungs-Filterasche wieder zugefügt werden und nach einer Mischung mit dem Gemenge wieder in den Glasschmelzofen eingeführt werden.

Das erfindungsgemäße Verfahren hat mehrere Vorteile. Erstens werden nur noch zwei Materialien aus dem Prozeß ausgetragen. Einmal der Werkstoff des Glases, welcher im Wegebau oder in ähnlichen Anwendungsfällen Verwendung finden kann und zweitens die Glasgalle, die sich zusammensetzt aus all den Salzen, deren Löslichkeitsgrenze in der Glasschmelze bei dem Glasschmelzprozeß und dem Grad des jeweils eingeschmolzenen Glases überschritten wird.

Die gesamte aus dem Prozeß ausgetragene Schadstoffmenge verringert sich dabei um die in der Gasreinigung anfallenden Stoffe und die darin enthaltenen Schwermetalle. Da die Löslichkeitsgrenze für die Metalle und im weiteren Sinne für alle Schwermetalle in der Glasschmelze bei dem Prozeß nicht erreicht wird, werden durch die Rückführung sämtliche Schwermetalle auslaugfest in das Glas eingebunden.

Für den Fachmann überraschend ist weiterhin, daß der Rückstand Glasgalle relativ sauber ist, da infolge der gegenüber dem vorgeschlagenen Verfahren größeren Gallemenge eine exaktere Abscheidung möglich ist und die Galle damit einen größeren Reinheitsgrad erreicht. Es ergibt sich damit die Möglichkeit, diese Glasgalle als Rohstoff in der chemischen Industrie abzusetzen. Der Anteil der Glasgalle beträgt etwa 5 - 10 % der eingegebenen Müllverbrennungsaschenmenge.

## Patentansprüche

1. Verfahren zur Überführung von festen, weitgehend wasserfreien Abfallstoffen in Glasform,
wobei als Abfallstoff Müllverbrennungsasche (80) verwendet wird,
die Abfallstoffe mit einem oder mehreren Zuschlagstoffen (81) zu einem aufzuschmelzenden Gemenge (82) vermischt werden,
das Gemenge durch Wärmezufuhr zum größten Teil zu einer Glasschmelze (84) aufgeschmolzen und zu einem kleinen Teil als aus dem schmelzendem Gemenge (83) austretendes Abgas (85) abgeführt wird,
aus der Glasschmelze durch Gießen und Abkühlen feste Glaskörper (9) erzeugt werden,
das unter Abschluß gegen die Umgebungsluft abgezogene heiße Abgas in das aufzuschmelzende Gemenge zurückgeführt und dort auf 20 bis 50° abgekühlt wird,
die bei der Abkühlung anfallenden Kondensationsprodukte mit dem Gemenge aufgeschmolzen werden und das aus dem aufzuschmelzenden Gemenge austretende kalte Abgas (89) einer Gasreinigung nach einem an sich bekannten Schadgas-Reinigungsverfahren unterzogen wird.

2. Verfahren nach Anspruch 1, dadurch gekennzeichnet, daß das aus dem schmelzenden Gemenge (83) austretende heiße Abgas (85) für eine Zeit von wenigstens 1,5 s auf eine Temperatur von wenigstens 1200°C nacherhitzt wird, danach unter teilweiser Kondensation auf eine Temperatur zwischen 200 bis 300°C vorgekühlt, anschließend in das aufzuschmelzende Gemenge (82) zurückgeführt und dort unter weiterer Kondensation auf 20 bis 50°C abgekühlt wird, und daß die bei der Vorkühlung anfallenden Kondensationsprodukte in das aufzuschmelzende Gemenge zurückgeführt und/oder abgezogen werden.

3. Verfahren nach Anspruch 2, dadurch gekennzeichnet, daß die Nacherhitzung des heißen Abgases (85) in einem separaten Nacherhitzer (91) erfolgt.

4. Verfahren nach Anspruch 2, dadurch gekennzeichnet, daß die Glasschmelze (84) auf einem Teil ihrer Oberfläche (84') gemengefrei gehalten wird und daß das heiße Abgas (85) nach dem Austreten aus dem schmelzenden Gemenge (83) über einen gemengefreien Teil der Oberfläche der Glasschmelze geleitet und durch Wärmeaufnahme aus der Glasschmelze nacherhitzt wird.

5. Verfahren nach Anspruch 1, dadurch gekennzeichnet, daß das aus dem aufzuschmelzenden Gemenge (82) austretende kalte Abgas (89) für eine Zeit von wenigstens 1,5 s auf eine Temperatur von wenigstens 1200°C nacherhitzt wird und danach dem Schadgas-Reinigungsverfahren zugeführt wird.

6. Verfahren nach Anspruch 1, dadurch gekennzeichnet, daß das aus dem Schadgas-Reinigungsverfahren austretende Abgas für eine Zeit von wenigstens 1,5 s auf eine Temperatur von wenigstens 1200°C nacherhitzt wird.

7. Verfahren nach einem der Ansprüche 1 bis 6, dadurch gekennzeichnet, daß auf dem mit Gemenge (83) bedeckten Teil der Oberfläche der Glasschmelze (84) eine flüssige Alkalisalz- oder Erdalkalisalz-Galleschicht erzeugt und durch bedarfsweisen Abzug in einem Schichtdickenbereich zwischen 2 und 5 cm gehalten wird.

8. Verfahren nach Anspruch 7, dadurch gekennzeichnet, daß als Galleschicht eine im wesentlichen aus Natriumsulfat oder -chlorid oder Kaliumsulfat oder -chlorid oder Lithiumsulfat oder -chlorid oder aus einem Gemisch von diesen bestehende Galleschicht verwendet wird und daß diese Galleschicht während des Schmelzvorganges durch Umsetzung aus Kalziumsulfat, Kalziumchlorid, Magnesiumsulfat und/oder Magnesiumchlorid erzeugt wird, welches mit der Müllverbrennungsasche (80) und/oder als gesonderter Zuschlagstoff zum Gemenge (82) dem Schmelzvorgang zugeführt wird.

9. Verfahren nach Anspruch 7, dadurch gekennzeichnet, daß bei hohen Schmelztemperaturen und/oder bei Alkalimangel Kalziumsulfat- und/oder Magnesiumsulfat-Galleschicht verwendet wird und daß diese Galleschicht unmittelbar aus mit dem Gemenge (82) oder als gesonderter Zuschlagstoff zugegebenem Kalziumsulfat und/oder Magnesiumsulfat erzeugt wird.

10. Verfahren nach einem der Ansprüche 1 bis 9, dadurch gekennzeichnet, daß als Zuschlagstoff SiO₂-haltige Stoffe, insbesondere Sand und/oder Phonolit, eingesetzt werden.

11. Verfahren nach den Ansprüchen 1 bis 10, dadurch gekennzeichnet, daß das aus dem schmelzenden Gemenge (83) austretende sowie das heiße Abgas (85) unter Unterdruck abgeführt und vorgekühlt wird, daß das vorgekühlte Abgas unter Überdruck gesetzt wird und daß die Durchleitung des Abgases durch das aufzuschmelzende Gemenge (82) im Gegenstrom zu diesem sowie derart geregelt erfolgt, daß der Druck des aus dem aufzuschmelzenden Gemenge austretenden kalten Abgases (89) im wesentlichen gleich dem Umgebungsluftdruck ist.

12. Verfahren nach einem der Ansprüche 1 bis 11, dadurch gekennzeichnet, daß in der Gasreinigung anfallender Staub und/oder Schlamm dem Gemenge (82) wieder zugemischt werden.

13. Verfahren nach Anspruch 12, dadurch gekennzeichnet, daß das Abgas (89) nach der Gasreinigung durch einen Aktivkohlefilter geleitet wird.

14. Verfahren nach Anspruch 12 oder 13, dadurch gekennzeichnet, daß die Abgase (89) vor oder nach der Gasreinigung abgekühlt werden.

15. Vorrichtung zur Durchführung des Verfahrens nach Anspruch 1,
mit einem geschlossenen Gemengemischer (3) mit einem Feststoffeinlaß (32) für die Aufgabe der zu mischenden Müllverbrennungsasche (80) und Zuschlagstoffe (81), mit einem Feststoffauslaß (33) für die Abgabe des fertigen, aufzuschmelzenden Gemenges (82) sowie mit einem Gaseinlaß (34) und einem Gasauslaß (35),
einem geschlossenen Glasschmelzofen (4) mit einer Gemengeaufgabevorrichtung (46) am einen Ofenende, welche mit dem Feststoffauslaß (33) des Gemengemischers (3) verbunden ist, mit wenigstens einer Abgas-Abzugsöffnung (47) und mit einem am anderen Ofenende angeordneten Glasschmelzeauslauf (48), und einer Gasreinigungseinrichtung (7), deren Eingang mit dem Gasauslaß (35) des Gemengemischers (3) verbunden ist.

16. Vorrichtung nach Anspruch 15, gekennzeichnet durch einen Abgaskühler (6) mit einem Gaseingang (61), der mit der Abgas-Abzugsöffnung (47) des Glasschmelzofens (4) verbunden ist, mit einem Gasausgang (62), der mit dem Gaseinlaß (34) des Gemengemischers (3) verbunden ist, und mit einem Auslaß für Kondensationsprodukte, der mit der Feststoff-Aufgabeseite des Gemengemischers (3) verbunden ist.

17. Vorrichtung nach den Ansprüchen 15 oder 16, dadurch gekennzeichnet, daß der Glasschmelzofen (4) mittels von oben her in das Ofeninnere vorragender Heizelektroden und/oder -stäbe (43) vollelektrisch beheizbar ist.

18. Vorrichtung nach den Ansprüchen 15 bis 17, dadurch gekennzeichnet, daß der Oberbau (42) des Glasschmelzofens (4) mit einem gasdichten Mantel (42′) außenseitig verkleidet ist.

19. Vorrichtung nach den Ansprüchen 15 bis 18, dadurch gekennzeichnet, daß ein Kühlmittelrohr (45) in der Höhe der Oberfläche (84′) der Glasschmelze (84) quer durch den Glasschmelzofen (4) geführt ist.

20. Vorrichtung nach den Ansprüchen 15 bis 19, dadurch gekennzeichnet, daß das Innere des Oberbaus (42) des Glasschmelzofens (4) durch einen querlaufenden, bis dicht über die Oberfläche (84′) der Glasschmelze (84) herabreichenden, eine vertikale Trennwand bildenden, abgehängten scheitrechten Bogen (44) in zwei Teile geteilt ist und daß das Kühlmittelrohr (45) parallel zu dem Bogen (44) verläuft.

21. Vorrichtung nach Anspruch 20, dadurch gekennzeichnet, daß die Abgas-Abzugsöffnung (47) des Glasschmelzofens (4) an dessen dem Glasschmelzeauslauf (48) benachbarten Ofenende angeordnet ist.

22. Vorrichtung nach den Ansprüchen 16 bis 21, dadurch gekennzeichnet, daß die Abgas-Abzugsöffnung (47) des Glasschmelzofens (4) unmittelbar über eine wärmeisolierte Gasleitung (60) mit dem Gaseingang (61) des Abgaskühlers (6) verbunden ist.

23. Vorrichtung nach den Ansprüchen 16 bis 21, dadurch gekennzeichnet, daß die Abgas-Abzugsöffnung (47) des Glasschmelzofens (4) unter Zwischenschaltung eines eigenen Gaserhitzers (91) mit dem Gaseingang (61) des Abgaskühlers (6) verbunden ist.

24. Vorrichtung nach den Ansprüchen 16 bis 23, dadurch gekennzeichnet, daß der Abgaskühler (6) mit einer Reinigungsvorrichtung (66) für eine kontinuierliche oder periodische Ausbringung der dort gebildeten Kondensationsprodukte (88) ausgestattet ist.

25. Vorrichtung nach den Ansprüchen 16 bis 24, dadurch gekennzeichnet, daß zwischen dem Auslaß (63) für Kondensationsprodukte des Abgaskühlers (6) und dem Gemengemischer (3) eine diesem die Kondensationsprodukte (88) aus dem Abgaskühler (6) periodisch oder kontinuierlich zufahrende Fördereinrichtung (64) angeordnet ist.

26. Vorrichtung nach den Ansprüchen 16 bis 25, dadurch gekennzeichnet, daß in eine den Gasausgang (62) des Abgaskühlers (6) mit dem Gaseinlaß (34) des Gemengemischers (3) verbindende Gasleitung (68) ein erstes, regelbares Sauggebläse (67) eingeschaltet ist.

27. Vorrichtung nach den Ansprüchen 15 bis 26, dadurch gekennzeichnet, daß der Gaseinlaß (34) des Gemengemischers (3) seitlich an dem Gemengemischer (3) und der Gasauslaß (35) des Gemengemischers (3) an dessen Feststoff-Aufgabeseite angeordnet ist.

28. Vorrichtung nach den Ansprüchen 15 bis 27, dadurch gekennzeichnet, daß dem Feststoffeinlaß (32) des Gemengemischers (3) mehrere jeweils mit Dosierschleusen (20) und Fördereinrichtungen (21) ausgestattete Vorratsbehälter (2) für die Müllverbrennungsasche (80) und die Zuschlagstoffe (81) vorgeschaltet sind.

29. Vorrichtung nach den Ansprüchen 15 bis 28, dadurch gekennzeichnet, daß in einer den Gasauslaß (35) des Gemengemischers (3) mit der Gasreinigungseinrichtung (7) verbindenden Gasleitung (71) ein zweites Sauggebläse (70) eingeschaltet ist und daß dieses in Kopplung mit dem ersten Sauggebläse (67) durch eine gemeinsame Steuereinheit nach Maßgabe von Meßwerten eines Drucksensors im Gasauslaß (35), des Gemengemischers (3) derart regelbar ist, daß der Druck im Gasauslaß (35) des Gemengemischers (3) im wesentlichen gleich dem Umgebungsluftdruck ist.

30. Vorrichtung nach den Ansprüchen 15 bis 29, dadurch gekennzeichnet, daß dem Glasschmelzeauslauf (48) des Glasschmelzofens (4) eine die auslaufende Glasschmelze (84˝) kontinuierlich zu als Schotter oder Betonzuschlagkörper verwendbaren Glaskörpern (9) verarbeitende Glasverarbeitungsmaschine (5) nachgeordnet ist.

31. Vorrichtung nach den Ansprüchen 15 bis 30, dadurch gekennzeichnet, daß die Gasreinigungseinrichtung (7) eine Naß-Gasreinigungseinrichtung ist und eine oder mehrere Wäscherstufen (72, 72′) einen Tropfenabscheider (73), eine Gas-Aufheizstrecke (74) und eine Aktivkohle-Filterstufe (7() umfaßt.

32. Vorrichtung nach den Ansprüchen 15 bis 30, dadurch gekennzeichnet, daß die Gasreinigungseinreichung (7) eine Trocken- bzw. Halbtrocken-Gasreinigungseinrichtung ist und eine Sättiger (75), einen Wirbelschicht- oder Sprühadsorber (76), eine Gas-Temperierstufe (77) und eine Aktivkohle-Filterstufe (78) umfaßt.

## Claims

1. Process for transforming solid, substantially anhydrous waste materials into glass, wherein garbage incineration ash (80) is used as waste material, the waste materials are mixed with one or more flux powders (81) to form a glass batch (82) to be melted, the glass batch by the largest part thereof is melted into a melting (84) by heating and by a small part thereof is extracted from the smelting glass batch (83) as exhaust gas (85), solid glass bodies (9) are produced from the melting by casting and cooling, the hot exhaust gas extracted under sealed conditions against the ambiant air is recycled into the glass batch and at this location cooled to 20 to 50 °C, the condensation products produced by the cooling are smelted with the glass batch, and the cold exhaust gas (89) flowing out of the glass batch to be melted is purified in a gas cleaning process for contaminated gas as is known as such.

2. Process as claimed in claim 1, characterized in that the hot exhaust gas (85) flowing out of the smelting glass batch (83) is reheated up to a temperature of at least 1200 °C for at least 1,5 s, thereafter is pre-cooled to a temperature of between 200 to 300 °C while condensating partly, subsequently is recycled into the glass batch (82) to be melted and at this location is cooled to 20 to 50 °C while condensating further, and that the condensation products produced during the pre-cooling are recycled into the glass batch to be melted and/or are exhausted.

3. Process as claimed in claim 2, characterized in that the reheating of the hot exhaust gas (85) is accomplished in a separate reheater (91).

4. Process as claimed in claim 2, characterized in that the melting (84) at a part of the surface (84') thereof is kept free of glass batch and that the hot exhaust gas (85) after flowing out of the smelting glass batch (83) is conducted across a surface of the melting free of glass batch and is reheated by picking up heat from the melting.

5. Process as claimed in claim 1, characterized in that the cold exhaust gas (89) flowing out of the glass batch (82) to be melted is reheated up to a temperature of at least 1200 °C for a time of at least 1,5 s and thereafter is conducted to a cleaning process for contaminated gas.

6. Process as claimed in claim 1, characterized in that the exhaust gas flowing out of the cleaning process for contaminated gas is reheated up to a temperature of at least 1200 °C for a time of at least 1,5 s.

7. Process as claimed in the claims 1 to 6, characterized in that a liquid layer of gall of alkali salts or alkaline earth salts is produced at that part of the surface of the melting (84) covered with glass batch (83) and that the layer is maintained at a layer thickness of between 2 and 5 cm by extraction if required.

8. Process as claimed in claim 7, characterized in that a layer of gall of substantially sodium sulfate or -chloride or calcium sulfate or -chloride or lithium sulfate or -chloride or a mixture thereof is used, and that this layer of gall is produced during the melting process by reaction of calcium sulfate, calcium chloride, magnesium sulfate and/or magnesium chloride added to the glass batch (82) together with the garbage incineration ash (80) and/or as a separate flux powder during the melting process.

9. Process as claimed in claim 7, characterized in that a layer of gall of calcium sulfate and/or magnesium sulfate is used at high melting temperatures and/or lack of alkali, and that this layer of gall is directly produced of the calcium sulfate and/or magnesium sulfate added together with the glass batch (82) or as a separate flux powder.

10. Process as claimed in claims 1 to 9, characterized in that SiO₂ containing substances, particularly sand and/or phonolite are used as flux powder.

11. Process as claimed in claim 10, characterized in that the hot exhaust gas (85) and the gas flowing out of the smelting glass batch (83) are extracted under vacuum and pre-cooled, that the pre-cooled exhaust gas is put under pressure, and that the exhaust gas is conducted through the glass batch (82) to be melted in a reverse current and is controlled such, that the pressure of the cold exhaust gas (89) flowing out of the glass batch to be melted is substantially equal to the pressure of the ambiant air.

12. Process as claimed in claims 1 to 11, characterized in that the dust and/or sludge produced in the gas cleaning is recycled to the glass batch (82).

13. Process as claimed in claim 12, characterized in that the exhaust gas (89) is conducted through an activated carbon filter after the gas cleaning.

14. Process as claimed in claim 12 or 13, characterized in that the exhaust gas (89) is cooled before or after the gas cleaning.

15. Apparatus for executing the process as claimed in claim 1, comprising a closed glass batch mixer (3) with a solid particle inlet (32) for the input of garbage incineration ash (80) to be mixed and flux powder (81), a solid particle outlet (33) for the output of the prepared glass batch (82) to be melted, a gas inlet (34) and a gas outlet (35), a closed glass melting furnace (4) with a glass batch input device (46) at the one end of the furnace connected with the solid particle outlet (33) of the glass batch mixer (3), with at least one exhaust gas outlet opening (47) and a melting outlet (48) provided at the other end of the furnace, and gas purifiers (7) with the inlet thereof connected with the gas outlet (35) of the glass batch mixer (3).

16. Apparatus as claimed in claim 15, characterized by an exhaust gas cooler (6) comprising a gas inlet (61) connected with the exhaust gas outlet opening (47) of the glass melting furnace (4), a gas outlet (62) connected with the gas inlet (34) of the glass batch mixer (3), and an outlet for the condensation products connected with the solid particle input side of the glass batch mixer (3).

17. Apparatus as claimed in claim 15 or 16, characterized in that the glass melting furnace (4) is completely electrically heatable by means of heating electrodes and/or -rods (43) protruding from the top into the interior of the furnace.

18. Apparatus as claimed in the claims 15 to 17, characterized in that the top construction (42) of the glass melting furnace (4) is lined at the outside thereof with a gas-tight case (42').

19. Apparatus as claimed in the claims 15 to 18, characterized in that a cooling medium pipe (45) is conducted across the glass melting furnace (4) at the level of the surface (84') of the melting (84).

20. Apparatus as claimed in the claims 15 to 19, characterized in that the interior of the top construction (42) of the glass melting furnace (4) is divided into two sections by a horizontal and straight bow (44) arranged transversely and extending close to the surface (84') of the melting (84) and forming a vertical partition wall, and that the cooling medium pipe (45) runs in parallel with the bow (44).

21. Apparatus as claimed in claim 20, characterized in that the exhaust gas outlet opening (47) of the glass melting furnace (4) is positioned at the furnace end adjacent to the melting outlet (48) thereof.

22. Apparatus as claimed in the claims 16 to 21, characterized in that the exhaust gas outlet opening (47) of the glass melting furnace (4) is directly connected with the gas inlet (61) of the exhaust gas cooler (6) by means of a heat-insulated gas pipe (60).

23. Apparatus as claimed in the claims 16 to 21, characterized in that the exhaust gas outlet opening (47) of the glass melting furnace (4) is connected with the gas inlet (61) of the exhaust gas cooler (6) by arranging inbetween a dedicated gas heater (91).

24. Apparatus as claimed in the claims 16 to 23, characterized in that the exhaust gas cooler (6) is provided with gas purifiers (66) for continuously or periodically removing the condensation products (88) produced there.

25. Apparatus as claimed in the claims 16 to 24, characterized in that a conveyor means (64) is arranged between the outlet (63) for condensation products of the exhaust gas cooler (6) and the glass batch mixer (3) for continuously or periodically supplying the condensation products (88) of the exhaust gas cooler (6) to the glass batch mixer.

26. Apparatus as claimed in the claims 16 to 25, characterized in that a first controllable extract fan (67) is positioned in a gas pipe (68) connecting the gas outlet (62) of the exhaust gas cooler (6) with the gas inlet (34) of the glass batch mixer (3).

27. Apparatus as claimed in the claim 15 to 26, characterized in that the gas inlet (34) of the glass batch mixer (3) is positioned laterally at the glass batch mixer (3) and the gas outlet (35) of the glass batch mixer (3) is positioned at the input side thereof for solid particles.

28. Apparatus as claimed in the claims 15 to 27, characterized in that in front of the solid particle inlet (32) of the glass batch mixer (3) several storage containers (2) for the garbage incineration ash (80) and the flux powder (81) are arranged with the containers each provided with dosing sluices (20) and conveyor means (21).

29. Apparatus as claimed in the claims 15 to 28, characterized in that a second extract fan (70) is arranged in a gas pipe (71) connecting the gas outlet (35) of the glass batch mixer (3) with the gas purifiers (7), and that the second extract fan in connection with the first extract fan (67) by means of a common control unit in response to data of a pressure sensor in the gas outlet (35) of the glass batch mixer (3) is controllable such, that the pressure in the gas outlet (35) of the glass batch mixer (3) is substantially equal to the ambiant air pressure.

30. Apparatus as claimed in the claims 15 to 29, characterized in that a glass processing machine (5) is arranged behind the melting outlet (48) of the glass melting furnace (4) with the glass processing machine continuously producing solid glass bodies (9) usable for addition to crushed stone or concrete out of the melting (84'') pouring out.

31. Apparatus as claimed in the claims 15 to 30, characterized in that the gas purifiers (7) are wet gas purifiers and comprise one or more cleaning steps (72, 72'), a mist collector (73), a gas heating step (74) and an activated carbon filter step (78).

32. Apparatus as claimed in the claims 15 to 30, characterized in that the gas purifiers (7) are dry gas purifiers or semi-dry gas purifiers and comprise a saturator (75), a fluid bed adsorber or spray adsorber (76), a gas temperature moderator (77) and an activated carbon filter step (78).

## Revendications

1. Procédé pour vitrifier des déchets solides substantiellement anhydres, les déchets étant constitués par des cendres d'incinérateurs d'ordures ménagères (80),
les déchets étant mélangés avec un ou plusieurs fondants (81) pour former une fritte à fondre (82),
la fritte étant fondue par apport de chaleur pour la majeure partie en un verre fondu (84) et étant évacuée pour une petite partie sous forme d'effluent gazeux (85) sortant de la fritte en fusion (83),
des corps en verre (9) solides étant produits à partir du verre fondu par coulée et refroidissement,
l'effluent gazeux chaud extrait en l'absence d'air ambiant étant réinjecté dans la fritte à fondre et y étant refroidi à une température comprise entre 20 et 50°C, les produits de condensation résultant du refroidissement étant fondus avec la fritte et le gaz perdu froid (89) sortant de la fritte à fondre étant soumis à une épuration après une opération connue d'épuration des gaz nocifs.

2. Procédé selon la revendication 1, **caractérisé** par le fait que l'effluent gazeux chaud (85) sortant de la fritte en fusion (83) est réchauffé pendant une durée d'au moins 1,5 s à une température d'au moins 1200°C puis est prérefroidi avec condensation partielle à une température comprise entre 200 et 300°C et est ensuite réinjecté dans la fritte à fondre (82) et y est refroidi à une température comprise entre 20 et 50°C avec nouvelle condensation et que les produits de condensation résultant du prérefroidissement sont réinjectés dans la fritte à fondre et/ou sont évacués.

3. Procédé selon la revendication 2, **caractérisé** par le fait que le réchauffage de l'effluent gazeux chaud (85) s'effectue dans un réchauffeur séparé (91).

4. Procédé selon la revendication 2, **caractérisé** par le fait que le verre fondu (84) ne comporte pas de fritte sur une partie de sa surface (84') et que l'effluent gazeux chaud (85) est guidé, après être sorti de la fritte en fusion (83), sur la partie de la surface du verre fondu exempte de fritte et est réchauffé en prélévant de la chaleur dans le verre fondu.

5. Procédé selon la revendication 1, **caractérisé** par le fait que le gaz perdu froid (89) sortant de la fritte à fondre (82) est réchauffé pendant une durée d'au moins 1,5 s à une température d'au moins 1200°C puis est soumis à l'opération d'épuration des gaz nocifs.

6. Procédé selon la revendication 1, **caractérisé** par le fait que le gaz perdu sortant de l'épuration des gaz nocifs est réchauffé pendant une durée d'au moins 1,5 s à une température d'au moins 1200°C.

7. Procédé selon l'une des revendications 1 à 6, **caractérisé** par le fait qu'une couche liquide de fiel de sel alcalin ou de sel alcalino-terreux est produite sur la partie de la surface du verre fondu (84) recouverte de fritte (83) et est maintenue sur une épaisseur comprise entre 2 et 5 cm si nécessaire par extraction.

8. Procédé selon la revendication 7, **caractérisé** par le fait que la couche de fiel utilisée est une couche de fiel constituée pour l'essentiel de sulfate ou de chlorure de sodium, de sulfate ou de chlorure de potassium, de sulfate ou de chlorure de lithium, ou d'un mélange de ces produits et que cette couche de fiel est produite pendant l'opération de fusion en réagissant avec du sulfate de calcium, du chlorure de calcium, du sulfate de magnésium et/ou du chlorure de magnésium qui est introduit dans le processus de fusion avec les cendres d'incinérateur d'ordures ménagères (80) et/ou sous forme de fondant (81) séparé ajouté à la fritte.

9. Procédé selon la revendication 7, **caractérisé** par le fait qu'en présence de températures de fusion élevées et/ou en cas de manque d'alcali, on utilise une couche de fiel de sulfate de calcium et/ou de sulfate de magnésium et que cette couche de fiel est produite directement à partir de sulfate de calcium et/ou de sulfate de magnésium ajouté avec la fritte (82) ou sous forme de fondant séparé.

10. Procédé selon l'une des revendications 1 à 9, **caractérisé** par le fait que l'on utilise comme fondant des substances contenant du SiO₂, en particulier du sable et/ou du phonolite.

11. Procédé selon les revendications 1 à 10, **caractérisé** par le fait que l'effluent gazeux sortant de la fritte en fusion (83) ainsi que l'effluent gazeux chaud (85) sont évacués par dépression et sont prérefroidis, que l'effluent gazeux prérefroidi est soumis à une surpression et que l'acheminement de l'effluent gazeux à travers la fritte à fondre (82) s'effectue à contre-courant de ladite fritte et est réglé de manière telle que la pression du gaz perdu froid (89) sortant de la fritte à fondre soit sensiblement égale à la pression atmosphérique.

12. Procédé selon l'une des revendications 1 à 11, **caractérisé** par le fait que la poussière et/ou la boue résultant de l'épuration des gaz sont mélangées de nouveau à la fritte (82).

13. Procédé selon la revendication 12, **caractérisé** par le fait que le gaz perdu (89) passe, après l'épuration, par un filtre à charbon actif.

14. Procédé selon la revendication 12 ou 13, **caractérisé** par le fait que les gaz perdus (89) sont refroidis avant ou après l'épuration des gaz.

15. Dispositif pour la réalisation du procédé selon la revendication 1, comprenant
un mélangeur de fritte (3) fermé avec une entrée de matière solide (32) pour l'introduction des cendres d'incinérateurs d'ordures ménagères (80) et des fondants (81) à mélanger, avec une sortie de matière solide (33) pour l'évacuation de la fritte à fondre (82) finie ainsi qu'avec une entrée de gaz (34) et une sortie de gaz (35),
un four de fusion de verre (4) fermé avec un dispositif d'alimentation en fritte (46) à une extrémité du four relié à la sortie de matière solide (33) du mélangeur (3), avec au moins une ouverture d'échappement de gaz (47) et une sortie de verre fondu (48) disposée à l'autre extrémité du four, et un dispositif d'épuration de gaz (7) dont l'entrée est reliée à la sortie de gaz (35) du mélangeur (3).

16. Dispositif selon la revendication 15, **caractérisé** par un dispositif de refroidissement d'effluents gazeux (6) avec une entrée de gaz (61) qui est reliée à l'ouverture d'échappement de gaz (47) du four de fusion de verre (4), avec une sortie de gaz (62) qui est reliée à l'entrée de gaz (34) du mélangeur (3) et avec une sortie pour des produits de condensation qui est reliée au côté alimentation en matière solide du mélangeur (3).

17. Dispositif selon les revendications 15 ou 16, **caractérisé** par le fait que le four de fusion de verre (4) peut être chauffé entièrement électriquement à l'aide d'électrodes et/ou de cartouches de chauffage (43) introduites par le haut et faisant saillie à l'intérieur du four.

18. Dispositif selon les revendications 15 à 17, **caractérisé** par le fait que la voûte (42) du four de fusion de verre (4) est revêtue sur le côté extérieur d'une enveloppe (42') étanche aux gaz.

19. Dispositif selon les revendications 15 à 18, **caractérisé** par le fait qu'un tuyau de fluide de refroidissement (45) traverse transversalement le four de fusion de verre (4) à la hauteur de la surface (84') du verre fondu (84).

20. Dispositif selon les revendications 15 à 19, **caractérisé** par le fait que l'intérieur de la voûte (42) du four de fusion de verre (4) est divisé en deux parties par un arc (44) décroché en ligne droite, s'étendant transversalement, descendant presque jusqu'à la surface (84') du verre fondu (84) et formant une paroi de séparation verticale et que le tuyau de fluide de refroidissement (45) s'étend parallèlement à l'arc (44).

21. Dispositif selon la revendication 20, **caractérisé** par le fait que l'ouverture d'échappement de gaz (47) du four de fusion de verre (4) est disposée sur l'extrémité du four voisine de la sortie de verre fondu (48).

22. Dispositif selon les revendications 16 à 21, **caractérisé** par le fait que l'ouverture d'échappement de gaz (47) du four de fusion de verre (4) est reliée directement à l'entrée de gaz (61) du dispositif de refroidissement d'effluents gazeux (6) par une conduite de gaz (60) calorifugée.

23. Dispositif selon les revendications 16 à 21, **caractérisé** par le fait que l'ouverture d'échappement de gaz (47) du four de fusion de verre (4) est reliée à l'entrée de gaz (61) du dispositif de refroidissement d'effluents gazeux (6) par l'intermédiaire d'un réchauffeur de gaz propre(91).

24. Dispositif selon les revendications 16 à 23, **caractérisé** par le fait que le dispositif de refroidissement d'effluents gazeux (6) est équipé d'un dispositif d'épuration (66) pour une évacuation continue ou périodique des produits de condensation (88) qui s'y forment.

25. Dispositif selon les revendications 16 à 24, **caractérisé** par le fait qu'il est prévu, entre la sortie (63) pour les produits de condensation du dispositif de refroidissement d'effluents gazeux (6) et le mélangeur (3), un dispositif de transport (64) amenant périodiquement ou en continu dans ledit mélangeur (3) les produits de condensation (88) provenant du dispositif de refroidissement d'effluents gazeux (6).

26. Dispositif selon les revendications 16 à 25, **caractérisé** par le fait qu'un premier ventilateur aspirant (67) réglable est monté dans une conduite de gaz (68) reliant la sortie de gaz (62) du dispositif de refroidissement d'effluents gazeux (6) à l'entrée de gaz (34) du mélangeur (3).

27. Dispositif selon les revendications 15 à 26, **caractérisé** par le fait que l'entrée de gaz (34) du mélangeur (3) est disposée latéralement sur le mélangeur (3) et la sortie de gaz (35) sur le côté d'alimentation en matière solide dudit mélangeur.

28. Dispositif selon les revendications 15 à 27, **caractérisé** par le fait que plusieurs réservoirs de stockage (2) équipés chacun de sas de dosage (20) et de dispositifs de transport (21) et destinés aux cendres d'incinérateurs d'ordures ménagères (80) et aux fondants (81) sont montés en amont de l'entrée de matière solide (32) du mélangeur (3).

29. Dispositif selon les revendications 15 à 28, **caractérisé** par le fait qu'un deuxième ventilateur aspirant (70) est monté dans une conduite de gaz (71) reliant la sortie de gaz (35) du mélangeur (3) au dispositif d'épuration de gaz (7) et que ce ventilateur est réglable du fait de son couplage avec le premier ventilateur aspirant (67) par une unité de commande commune en fonction de valeurs mesurées par un capteur de pression monté dans la sortie de gaz (35) de mélangeur (3) de telle manière que la pression dans la sortie de gaz (35) du mélangeur (3) soit sensiblement égale à la pression atmosphérique.

30. Dispositif selon les revendications 15 à 29, **caractérisé** par le fait qu'une machine de traitement de verre (5) travaillant en continu le verre fondu (84'') qui sort pour en faire des corps de verre (9) utilisables comme agrégats concassés ou comme agrégats pour le béton, est montée en aval de la sortie de verre fondu (48) du four de fusion de verre (4).

31. Dispositif selon les revendications 15 à 30, **caractérisé** par le fait que le dispositif d'épuration de gaz (7) est un dispositif d'épuration de gaz par voie humide et comprend un ou plusieurs étages de lavage (72, 72'), un pare-gouttes (73), un dispositif de chauffage de gaz (74) et un étage de filtration à charbon actif (78).

32. Dispositif selon les revendications 15 à 30, **caractérisé** par le fait que le dispositif d'épuration de gaz (7) est un dispositif d'épuration de gaz par voie sèche ou semi-séche et comprend un saturateur (75), un adsorbeur à couche fluidisée ou par pulvérisation (76), un étage d'équilibrage de la température de gaz (77) et un étage de filtration à charbon actif (78).
